# EUROPEAN PATENT APPLICATION

(11) **EP 3 626 045 A1**
(43) Date of publication of application: **25.03.2020**
(21) Application number: 19198388.1
(22) Date of filing: 19.09.2019
(51) Int. Cl.: A01F 25/13

(54) **FRONT ATTACHMENT DEVICE FOR SCREENING A PIT OPENING OF A SILAGE SILO AND A METHOD THEREFOR**

(30) Priority: 21.09.2018 NL 2021679
(71) Applicant: Hiemstra, Jan Hoeke Andries, 9261 XJ Eastermar (NL)
(72) Inventor: Hiemstra, Jan Hoeke Andries, 9261 XJ Eastermar (NL)
(74) Representative: Verdijck, Gerardus

(57) **Abstract**

Front attachment device (30) for screening a pit opening of a silage silo, comprising:
- a frame (31);
- a roof (32) which is connected to the frame and extends substantially horizontally and which is configured to screen at least a part of a first side of the pit opening in the silage silo;
- screening means (76) connected to the frame and adapted to screen at least a part of a second side of the pit opening; and
- displacing means (38) arranged on the frame;
wherein the roof and the screening means are together configured in a first mode to screen the pit opening of the silage silo.

## Description

The invention relates to a front attachment device for screening a pit opening of a silage silo, for instance for protection from birds and/or water and/or sunlight.

It is known in practice to screen the pit opening as soon as it is out of use. The usual way is to cover the cutting face of the pit opening using the material for covering the pit. This is for instance the plastic sheet which lies over the pit and is usually fixed with vehicle tyres.

It has been found in practice that the pit is often left open by the user, since covering the pit opening is labour-intensive. Leaving the pit opening open gives for instance birds the opportunity to take food from the pit opening. Weather influences can further degrade the quality of the feed in the pit opening such that it is no longer suitable as animal feed. This may even mean that further use of the pit requires the removal of the cutting face of the pit opening. This material can no longer be used and can be deemed waste.

The present invention has for its object to provide a front attachment device with which the pit opening can be preferably wholly screened in effective and efficient manner.

The present invention provides for this purpose a front attachment device for screening a pit opening of a silage silo, comprising:
- a frame;
- a roof which is connected to the frame and extends substantially horizontally and which is configured to screen at least a part of a first side of the pit opening in the silage silo;
- screening means connected to the frame and adapted to screen at least a part of a second side of the pit opening; and
- displacing means arranged on the frame;
wherein the roof and the screening means are together configured in a first mode to screen the pit opening of the silage silo.

Providing a frame with a roof and screening means which are together configured to screen the pit opening in a first mode achieves that weather and birds cannot cause damage to the feed in the silage silo via the pit opening. The effect hereof is that the quality of the material of the cutting face of the pit opening does not degrade, or in any case does so to lesser extent. This results in less waste and less loss of feed. The material in the pit is hereby used more effectively and efficiently.

The cutting face of the pit opening is the face of the pit which is exposed during removal of feed. This is usually a substantially vertical face, but also one at an angle to the ground surface.

It is noted that the roof and the screening means co-act to screen the pit opening in a first mode. In a second mode, the 'open' mode, it is the case that the screening means, the roof or both are wholly or partially removed so that the pit opening is accessible to a user in order to remove feed from the pit. Following removal of the required quantity of feed the pit opening can then be closed by moving the roof and the screening means into the first 'closed' mode. In this closed mode the pit opening is in principle wholly closed off and it is not possible for for instance birds to consume the feed in the pit opening.

The screening means can be connected in various ways to the frame or form an integral part thereof. Examples hereof are fastenings with hooks, eyes, Velcro, screws, adhesives. It will be apparent that other connecting elements are likewise possible according to the invention. The screening sheet is optionally integrated with the roof.

It is further noted that the screening sheet can be integrated with the roof.

It is further noted that the roof can have differing shapes, for instance a substantially flat roof, a substantially pitched roof, a substantially convex roof. It will be apparent that other shapes are likewise possible according to the invention.

It is further noted that a pit can comprise grass, maize, beets, grain or a mixture hereof. It will be apparent that other crops are likewise possible for pits according to the invention.

It is further noted that a silage silo is also understood to mean a pit on a hardened surface and a feed tube on a hardened surface.

A further advantage of the front attachment device according to the invention is that the front attachment device comprises displacing means. This has the further additional advantage that the front attachment device can be displaced effectively and efficiently with the displacing means. The effect is that the screening of the pit opening is less labour-intensive compared to closing of the pit opening. An additional effect is that the user need pay less attention to changes in weather.

It hereby becomes possible to easily clear the pit opening of the silage silo and to optionally use the front attachment device with different silage silos.

In a currently preferred embodiment the centre of gravity of the front attachment device is located below the roof. The frame is preferably manufactured from metal, for instance iron, stainless steel or aluminium. This has the advantage that the front attachment device is robust and displaceable.

In an embodiment according to the invention the screening means can be arranged movably on the frame, wherein the screening means are preferably arranged for up and downward movement on the frame, and wherein in the first mode the screening means close the second side of the pit opening and in a second mode leave the pit opening at least partially open.

Arranging the screening means movably on the frame achieves that they are movable between an opened state and a closed state (and a position therebetween). This makes it easier to take the feed out of the pit.

An advantageous embodiment according to the invention comprises adjusting means configured to adjust the roof in the height and/or width and/or to change the angle of slope of the roof.

Applying adjusting means configured to adjust the roof has the advantage that the front attachment device can be used for different sizes of silage silo. The effect is that, because of the uniformity, the front attachment device can be applied efficiently and effectively. It is further noted that adjustment of the roof can take place in both the height and the width.

The use of an angle of slope has the advantage that rain and snow do not accumulate on the roof and thereby load the roof unnecessarily heavily.

Possible adjusting means for adjustment in the length are for instance a telescopic arm, a pin and hole connection, an extending cylinder. It will be apparent that other adjusting means are likewise possible according to the invention. It is noted that for instance the extending cylinder can be operated with for instance a hand pump, an electric pump, a spring. It will be apparent that other operating means are likewise possible according to the invention. It is further noted that the extending cylinder can also be used to adjust the angle of slope of the roof.

Possible adjusting means for adjustment in the width are for instance, but not limited to, a telescopic arm, a spring. It will be apparent that other adjusting means are likewise possible according to the invention.

In a further advantageous embodiment according to the invention the screening means comprise a screening sheet.

Providing a screening sheet makes it possible to screen the pit opening from birds and to protect it against weather influences such as sunlight, water and wind. The effect is that the quality of the material of the cutting face of the pit opening degrades less quickly.

An additional advantage is that the screening sheet can be made from lightweight materials and is also flexible. The front attachment device hereby does not become unnecessarily heavy. An additional effect is that the screening sheet can be easily removed for inspection of the cutting face of the pit opening without the front attachment device having to be displaced.

A further additional advantage is that such a screening sheet can be coupled easily to the frame and can if necessary be replaced. The roof and/or frame hereby need not be a heavy support construction.

It is further noted that the screening sheet can be manufactured from for instance metal, plastic, cotton. It will be apparent that other materials for manufacturing the screening sheet are likewise possible according to the invention. It is noted that the screening sheet can be embodied as a fine-mesh structure, a coarse-mesh structure, or fully closed off. It will be apparent that other embodiments of the screening sheet are likewise possible according to the invention.

In a further advantageous embodiment according to invention the displacing means comprise wheels and/or engaging elements for a tractor and/or forklift truck.

An advantage of the front attachment device according to the invention is that the displacing means comprise wheels and/or engaging elements for a tractor and/or forklift truck. It hereby becomes possible to displace the front attachment device. This achieves that the pit opening can be easily protected from birds and weather influences.

An additional advantage is that the front attachment device can be displaced with means which are generally used to fill the pit, and no special expensive equipment need be acquired for the purpose. This means that costs remain limited to the front attachment device. It is further noted that the engaging elements for a tractor and/or forklift truck can be adapted to an available model of tractor and/or forklift truck.

In a further advantageous embodiment according to the invention the front attachment device further comprises:
- at least one motion or proximity sensor;
- drive means; and
- a control configured to receive input from the at least one sensor and configured to control the drive means for automatic displacement of the front attachment device.

The sensor for automatic displacement can be embodied in diverse ways. It is for instance possible here to envisage a motion sensor or a proximity sensor. Such a sensor serves to detect a distance or movement indicating that the pit opening must be left clear.

Displacement of the front attachment device can be automated by providing at least one sensor, drive means and the control. An advantage hereof is that the operation of the front attachment device is made easier.

An additional advantage is that the front attachment device can be remotely controlled, and the physical presence of the user is unnecessary. This means that the front attachment device can be displaced in anticipation of the use of the pit. The user will hereby be able to work more efficiently.

An additional advantage is that the operation of the front attachment device does not entail any physical exertion. A user will hereby experience less physical discomfort as a result of the work carried out.

Providing at least one sensor makes it possible for the front attachment device to be able to receive differing input. Examples of input are: temperature, air humidity, precipitation, location, speed. It will be apparent that other input from at least one sensor is likewise possible according to the invention.

Providing drive means ensures that the front attachment device can move independently. Examples of drive means are: electric motor, combustion engine, fuel cell. It will be apparent that other embodiments of the drive means are likewise possible according to the invention.

Providing a control makes it possible for the front attachment device to be controlled. The control is configured to process received input and to control the front attachment device. The control is further configured to receive a signal from the user and to send a signal to the user. The front attachment device can hereby be controlled remotely.

In a further advantageous embodiment according to the invention engaging elements are provided displaceably on the frame.

Providing the engaging elements displaceably on the frame achieves that it is possible to use different sizes and embodiments of a device which engages on the engaging elements. The advantage is that different devices, for instance a tractor or a forklift truck, can be used by the user to engage the engaging elements.

It is further noted that the engaging elements for a tractor and/or forklift truck can be adapted to the model of an available tractor and/or forklift truck. Lateral positioning of the elements is for instance possible with a so-called side shift mechanism.

In a further advantageous embodiment according to the invention at least one of the wheels is connected operatively to a pallet truck mechanism.

Operative connection of at least one of the wheels of the front attachment device according to the invention to a pallet truck mechanism has the advantage that displacement of the front attachment device is possible in effective manner. An additional advantage is that a pallet truck is simpler to operate than a tractor and/or a forklift truck.

In a further advantageous embodiment according to the invention the frame, screening means and displacing means can be wholly or partially disassembled.

This achieves that it is possible to transport the front attachment device as construction kit. The effect hereof is that transport takes up less space and the device can hereby be transported more easily, more efficiently and more effectively.

An additional advantage is that the user can assemble the front attachment device him/herself. Assembly costs can hereby be saved.

It is further noted that assembly can take place by means of for instance bolting, welding, screwing, glueing. It will be apparent that other assembly techniques are likewise possible according to the invention.

A further additional advantage of the fact that the front attachment device can be disassembled is that the transport and storage costs will hereby remain limited. A further additional advantage is that the front attachment device can be disassembled by the user when it is not in use for a longer period.

The invention further also relates to a silage silo provided with a front attachment device for screening a pit opening of a silage silo.

Such a silage silo provides the same effects and advantages as stated above for the front attachment device.

The invention further also relates to a method for screening a pit opening of a silage silo. The method comprises the steps of:
- positioning a front attachment device according to the invention in front of the pit opening; and
- screening the pit by means of the front attachment device.

Such a method provides the same effects and advantages as stated above for the front attachment device.

An advantage is that a front attachment device is easy to displace and position. This saves the user time.

In a currently preferred embodiment the method comprises the step of adjusting the front attachment device with adjusting means.

The front attachment device is preferably adjusted such that water cannot fall onto the cutting face of the pit opening, birds cannot come into contact with the pit opening, sunlight cannot shine on the cutting face of the pit opening and wind cannot blow away the material at the pit opening.

In a further preferred embodiment the method comprises the step of assembling the front attachment device at or close to a location of use. An advantage hereof is achieving a high measure of efficiency and reduction of costs, since less storage space and less transport is necessary in getting the front attachment device to the user.

Further advantages, features and details of the invention are elucidated on the basis of preferred embodiments thereof, wherein reference is made to the accompanying drawings, in which:
- figure 1 is a schematic view of a silage silo with pit opening;
- figure 2 is a schematic view of a cross-section of a front attachment device;
- figure 3 is a schematic view of the silage silo with the front attachment device and a displacing mechanism; and
- figure 4 is a schematic representation of the screening process.

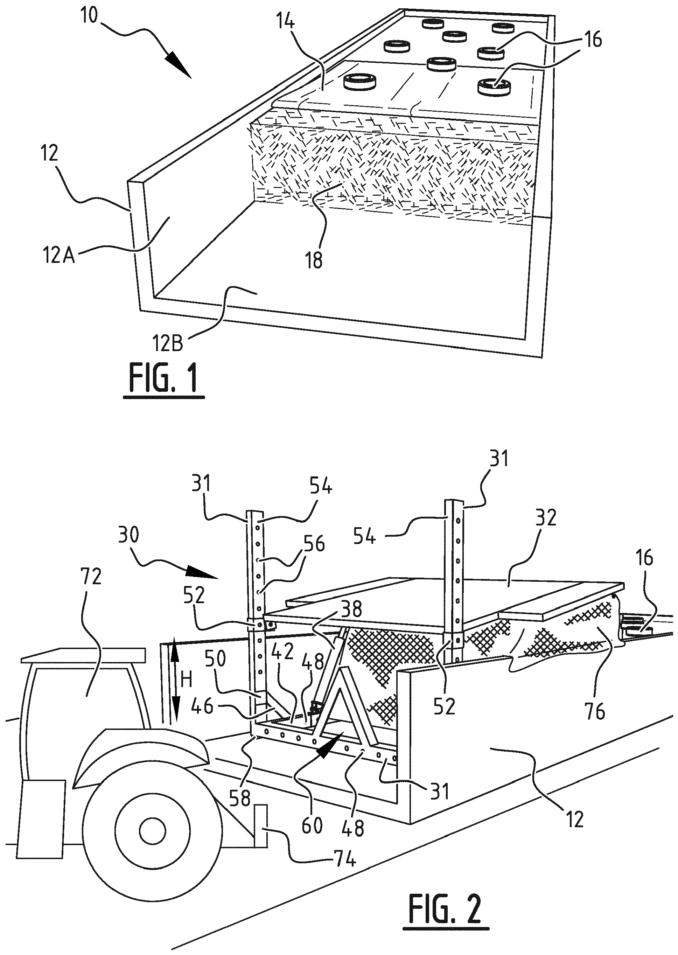

Silage silo 10 (Figure 1) comprises a silo 12 consisting of two side walls 12A and floor part 12B, inside which silage feed is stored. The content of silage silo 10 is covered with covering material 14 held at the desired position by fixation means 16. In the shown situation pit opening 18 is open and exposed to birds and the weather.

In the shown embodiment fixation means 16 are vehicle tyres. It is further noted that fixation means are not limited to vehicle tyres.

Front attachment device 30 (figure 2) comprises frame 31 and roof 32. Roof 32 comprises fastening means (not shown) for fastening screening means 76 and adjusting means (not shown). The adjusting means in the roof serve for adjustment of the roof in the width. Roof 32 is operatively connected to extending cylinder 38 by means of a connecting element (not shown). Cylinder 38 is configured to adjust the angle of slope (not shown) and height H of roof 32. Roof 32 is connected to frame 31 by means of attaching means (not shown), wherein adjusting means 52 form part of frame 31. Support 46 is part of frame 31 and connected to element 54 by means of connecting element 50 and to element 42 by means of a connecting element (not shown). The height of roof 32 can be adjusted by making use of adjustment points 56. In the shown embodiment frame 31 stands on feet 58 which are adjustable by adjusting means 48. Front attachment device 30 can be displaced by means of displacing element 60. Front attachment device 30 can be displaced by means of displacing means 60 which can couple operatively to engaging means 74 fixed to displacing vehicle 72. In the shown embodiment of displacing element 60, displacing element 60 is a sub-frame for tractor engagement points. Wheels and/or a pallet truck mechanism can optionally be used instead of feet 58.

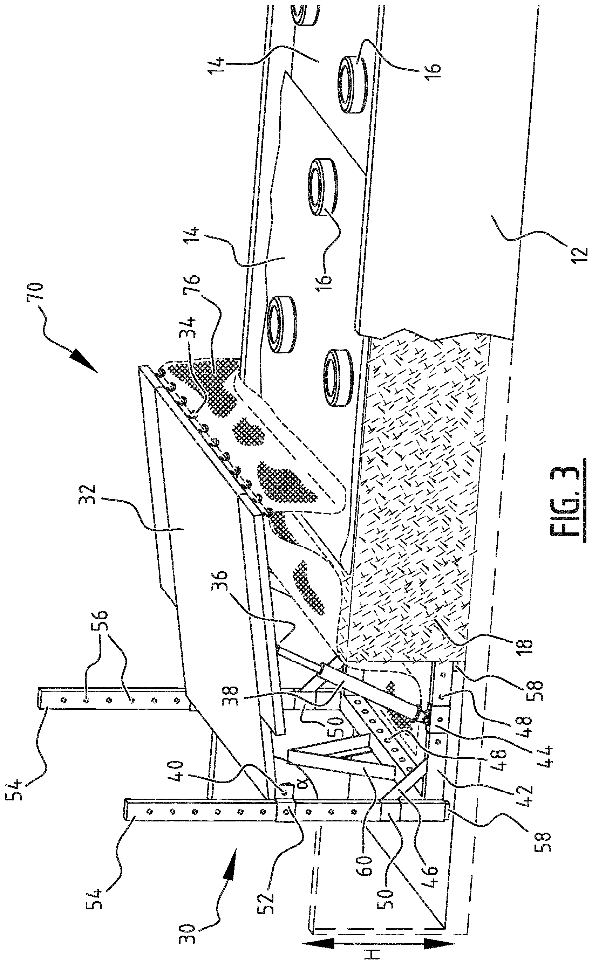

Silage silo 70 (Figure 3) is screened by front attachment device 30, wherein screening means 76 and roof 32 protect pit opening 18 from birds and weather influences. Roof 32 comprises fastening means 34 for fastening screening means 76. Roof 32 is connected to frame 31 by means of fixing means 40, wherein adjusting means 52 form part of frame 31. Cylinder 38 is configured to adjust angle of slope α and height H of roof 32. Cylinder 38 is connected to roof 32 by means of connecting element 36 and to element 42 by means of connecting element 44. Adjusting means 52 are also configured to adjust height H.

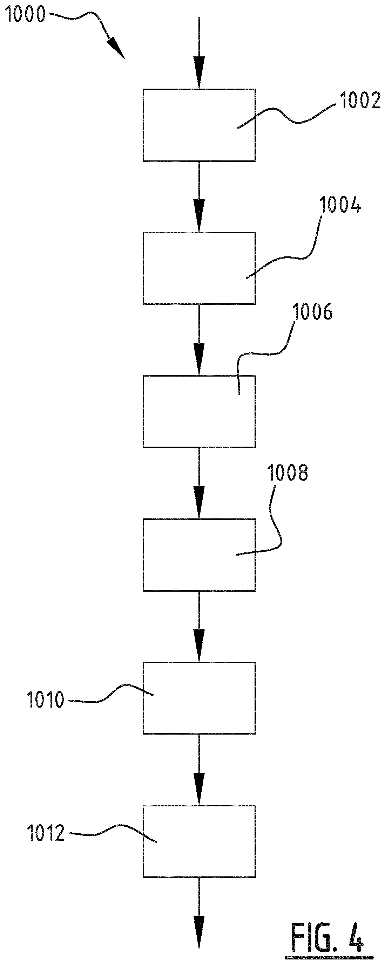

Screening process 1000 (Figure 4) consists of the steps of opening silage silo 1002, removing required feed 1004, screening the pit opening of silage silo 1006, reopening the silage silo 1008, removing required feed 1010, screening the pit opening of silage silo 1012.

Opening of the silage silo is required in order to obtain feed. The pit opening can be closed efficiently and effectively by the front attachment device according to the invention. After opening the pit and removing the required feed the pit opening is screened by the front attachment device. The front attachment device is displaceable by being hooked to a tractor. This can place the front attachment device at the desired position. Opening of the pit takes place by hooking the front attachment device to the tractor and displacing thereof to a random desired position. The pit can be screened again following use, wherein the front attachment device is hooked onto the tractor and then displaced.

The assembly of the front attachment device can be carried out on site by the user. The front attachment device is supplied as construction kit. This can be assembled on site by the user and/or technician and/or manufacturer. Delivery can take place in separate components of the front attachment device, for instance frame and roof separately of each other.

The present invention is by no means limited to the above described preferred embodiments thereof. The rights sought are defined by the following claims, within the scope of which many modifications can be envisaged.

## Claims

1. Front attachment device for screening a pit opening of a silage silo, comprising:
- a frame;
- a roof which is connected to the frame and extends substantially horizontally and which is configured to screen at least a part of a first side of the pit opening in the silage silo;
- screening means connected to the frame and adapted to screen at least a part of a second side of the pit opening; and
- displacing means arranged on the frame;
wherein the roof and the screening means are together configured in a first mode to screen the pit opening of the silage silo.

2. Front attachment device as claimed in claim 1, wherein the screening means are arranged movably on the frame, wherein the screening means are preferably arranged for up and downward movement on the frame, and wherein in the first mode the screening means close the second side of the pit opening and in a second mode leave the pit opening at least partially open.

3. Front attachment device as claimed in claim 1 or 2, further comprising adjusting means configured to adjust the roof in the height and/or width and/or to change the angle of slope of the roof.

4. Front attachment device as claimed in any of the foregoing claims, wherein the screening means comprise a screening sheet.

5. Front attachment device as claimed in any of the foregoing claims, wherein the displacing means comprise wheels and/or engaging elements for a tractor and/or forklift truck.

6. Front attachment device as claimed in claim 5, wherein at least one of the wheels is connected operatively to a pallet truck mechanism.

7. Front attachment device as claimed in any of the foregoing claims, wherein the front attachment device further comprises:
- at least one positioning and/or proximity sensor;
- drive means; and
- a control configured to receive input from the at least one sensor and configured to control the drive means for automatic displacement of the front attachment device.

8. Front attachment device as claimed in any of the claims 4-7, when dependent on claim 4, wherein the engaging elements are provided displaceably on the frame, and are preferably provided for displacement in a lateral direction.

9. Front attachment device as claimed in any of the foregoing claims, wherein the frame, screening means and displacing means can be wholly or partially disassembled.

10. Silage silo provided with a front attachment device as claimed in any of the foregoing claims.

11. Method for screening a pit opening of a silage silo, comprising the steps of:
- positioning a front attachment device as claimed in any of the foregoing claims in front of the pit opening; and
- screening the pit by means of the front attachment device.

12. Method as claimed in claim 11, further comprising the step of adjusting the front attachment device with adjusting means.

13. Method as claimed in claim 11 or 12, comprising the step of:
- assembling the front attachment device at or close to a location of use.
